# FASCICULE DE BREVET EUROPEEN

(11) **EP 3 776 795 B1**
(45) Date de publication et mention de la délivrance du brevet: **16.02.2022**
(21) Numéro de dépôt: 19717127.5
(22) Date de dépôt: 20.03.2019
(51) Int. Cl.: H02J 7/00, H02J 7/14

(54) **PROCEDE DE CONTROLE D'UN SYSTEME DE BATTERIE POUR OPTIMISER LE VIEILLISSEMENT DES SOUS-SYTEMES DE BATTERIE**
VERFAHREN ZUR STEUERUNG EINES BATTERIESYSTEMS ZUR OPTIMIERUNG DER ALTERUNG DER BATTERIETEILSYSTEME
METHOD FOR CONTROLLING A BATTERY SYSTEM FOR OPTIMISING THE AGEING OF THE BATTERY SUB-SYSTEMS

(30) Priorité: 05.04.2018 FR 1852945
(43) Date de publication de la demande: 17.02.2021
(73) Titulaire: PSA Automobiles SA, 78300 Poissy (FR)
(72) Inventeur: MIZWICKI, Eric, 95180 Menucourt (FR); ATI, Mohamed, 78100 St Germain en Laye (FR)
(86) Numéro de dépôt international: PCT/FR2019/050627
(87) Numéro de publication internationale: WO 2019/193263

(56) Documents cités:
- DE-A1-102016 201 520
- JP-A- 2013 038 910
- US-A1- 2015 123 481

## Description

Le domaine de l'invention concerne les systèmes de batterie de véhicule, préférentiellement pour les véhicules automobiles électriques et les véhicules hybrides électriques.

Conventionnellement, les systèmes de batterie comportent un ou plusieurs sous-systèmes de batteries pouvant être agencés en montage série et/ou parallèle en fonction des besoins électriques de l'architecture du véhicule en terme de tension d'alimentation des équipements et des performances d'autonomie de roulage recherchées en mode électrique. Par ailleurs, un sous-système de batterie est le plus souvent constitué de plusieurs cellules élémentaires, elles-mêmes disposées en série et/ou en parallèle pour augmenter la tension et le courant électrique du sous-système. On entend ici par le terme sous-système de batterie, une unité électrique servant au stockage et à la restitution d'énergie électrique pouvant être adressée à ses bornes individuellement par une interface électrique (interface consommatrice destinée à recevoir de l'énergie électrique du sous-système et par une interface de recharge destinée à transmettre de l'énergie électrique au sous-système).

Le document EP3188342A1 illustre par exemple un système de batterie comportant plusieurs sous-systèmes pouvant être rechargés individuellement par une interface de recharge. Il propose un système et procédé de recharge permettant de déterminer la tension et le courant optimal de chacun des sous-systèmes pour opérer une recharge électrique par l'interface de recharge. Un autre exemple de dispositif de chargement comportant un système de régulation thermique peut être trouvé dans le document US 2015/123481.

Par ailleurs, du fait de la diversité des architectures électriques automobiles les organismes de standardisation ont classifié les bornes de recharge électrique en plusieurs niveaux de classes définis par des tensions de recharge, courant, puissance supportés, ainsi que les standard de communication compatible. A cet effet, il a été défini les classes de puissance suivantes listées ici selon des valeurs de puissance croissante allant de 10kW à plus de 350kW: FC10, FC20, FC50, HPC150, HPC250, HPC350.

Afin d'améliorer la mobilité d'un véhicule électrique rechargeable, il est nécessaire d'une part que le véhicule soit compatible avec la plupart des technologies des bornes de recharge et d'autre part que le véhicule puisse bénéficier de la puissance de recharge maximale d'une borne pour réduire le temps de recharge. Un objectif de l'invention est donc d'améliorer l'interopérabilité du système de batterie pour bénéficier d'une puissance de recharge maximale. Un autre objectif de l'invention est de proposer un système de batterie rechargeable compact.

Par ailleurs, les systèmes de batteries comportant des sous-systèmes de batterie individuels pouvant être sollicités en charge et décharge asymétriquement posent le problème de la gestion du vieillissement du système dans son ensemble. En effet, il est nécessaire pour éviter un vieillissement prématuré d'un système de batterie que les sollicitations électriques entre les sous-systèmes de batteries soient homogènes au cours de la durée de vie d'un véhicule. Or, typiquement les équipements embarqués du véhicule, notamment le système de régulation thermique d'un système de batterie est alimenté lors d'une recharge par le même sous-système de batterie. Cette configuration entraine au fil du temps un déséquilibre en vieillissement. Un autre objectif de l'invention est donc d'empêcher un vieillissement prématuré d'un système de batterie comportant des sous-systèmes connectés en parallèle.

Plus précisément, l'invention concerne un procédé de contrôle d'un système de batterie rechargeable pour un véhicule, le système comportant au moins deux sous-systèmes de batteries, au moins une interface de recharge susceptible d'opérer une recharge à une première tension de recharge lorsque ces sous-systèmes de batteries sont configurés en montage parallèle et à une deuxième tension de recharge lorsque ces sous-systèmes de batteries sont configurés en montage série, et au moins une première interface consommatrice susceptible d'opérer à une première tension d'alimentation déterminée et alimentant au moins un dispositif de régulation thermique de ces au moins deux sous-système de batteries du système de batterie, des moyens de commande pour piloter la configuration de connexion des au moins deux sous-systèmes de batteries à l'interface de recharge et à la première interface consommatrice. Selon l'invention, le procédé comporte les étapes successives suivantes lors de l'activation d'une recharge opérée par l'intermédiaire de l'interface de recharge à la deuxième tension :

- la connexion en série des au moins deux sous-systèmes de batterie pour opérer une recharge à la deuxième tension de recharge,

- en cas de détection d'une condition d'activation d'un dispositif de régulation thermique du système de batterie, la connexion des bornes d'un premier sous-système seulement parmi les au moins deux sous-systèmes de batterie à la première interface consommatrice,

- en cas de détection d'une condition de commutation lors de la recharge à ladite deuxième tension de recharge, la déconnexion des bornes du premier sous-système de batterie de la première interface consommatrice, puis la connexion par les moyens de commande des bornes d'un deuxième sous-système parmi les au moins deux sous-systèmes de batterie à la première interface consommatrice.

Selon une variante, la connexion en série des au moins deux sous-systèmes de batterie consiste à piloter un moyen de commutation électronique dans un état fermé.

Selon une variante, le procédé comporte en outre la détermination d'un critère de sélection pour arbitrer le choix du sous-système de batterie parmi les au moins deux sous-systèmes pour l'alimentation de la première interface consommatrice, et la connexion des bornes du premier sous-système à la première interface consommatrice est fonction du critère de sélection.

Selon une variante, le critère de sélection est déterminé à partir d'un signal électronique permettant d'identifier quel sous-système, parmi les au moins deux sous-systèmes de batterie, a été sollicité lors de la recharge précédente.

Selon une variante, la condition de commutation est active lorsque la température estimée du premier sous-système de batterie atteint un seuil de protection de température.

Selon une variante, la condition de commutation est active en cas de détection d'un premier état de vieillissement du premier sous-système de batterie qui est supérieur à un deuxième état de vieillissement du deuxième sous-système de batterie.

Selon une variante, le premier état de vieillissement et le deuxième état de vieillissement sont déterminés par une fonction d'évaluation du vieillissement des au moins deux sous-systèmes de batteries, ladite fonction étant exécutée par les moyens de commandes.

Selon une variante, pour configurer les connexions des bornes du premier et du deuxième sous-système de batterie à la première interface consommatrice, pour configurer les connexions des bornes du premier et du deuxième sous-système de batterie à la première interface consommatrice, des moyens de commutation électronique du premier et du deuxième sous-système de batteries sont pilotés de façon coordonnée par un moyen de pilotage.

Selon une variante, lors de la détection de la fin de la recharge, le procédé comporte en outre la connexion d'un sous-système de batterie seul ayant l'état de charge le plus haut, parmi les au moins deux sous-systèmes de batterie, à une deuxième interface consommatrice destinée à alimenter une machine de traction électrique de manière à équilibrer l'état de charge entre les sous-systèmes de batterie durant le roulage du véhicule.

Il est prévu selon l'invention un véhicule comprenant un système de batterie rechargeable, le système comportant au moins deux sous-systèmes de batteries, au moins une interface de recharge susceptible d'opérer une recharge à une première et à une deuxième tension de recharge et au moins une première interface consommatrice susceptible d'opérer à une première tension d'alimentation déterminée et alimentant au moins un dispositif de régulation thermique du système de batterie, des moyens de commande pour piloter la configuration de connexion des au moins deux sous-systèmes de batteries à l'interface de recharge et à la première interface consommatrice. Selon l'invention, les moyens de commandes sont configurés pour exécuter le procédé selon l'un quelconque des modes de réalisation précédent lors de l'activation d'une recharge opérée par l'intermédiaire de l'interface de recharge à la deuxième tension.

L'invention propose un système de batterie comprenant deux sous-systèmes de batterie ou plus pouvant être connectés en parallèle ou en série et ayant un nombre optimal de connecteurs et de relais permettant d'opérer une recharge à une haute tension (jusqu'à 1000V) tout en alimentant pendant la recharge des équipements du véhicule à une tension inférieure. L'invention assure également un vieillissement homogène des sous-systèmes de batterie tout au long de la vie du système de batterie en alternant les sous-systèmes sollicités lors d'une recharge et d'une recharge à l'autre. Par ailleurs, l'invention permet d'assurer un fonctionnement dégradé de la machine de traction du véhicule lorsqu'un des deux sous-systèmes de batterie est défaillant en maintenant connecté l'autre sous-système. Un autre avantage est la compatibilité du système de batterie avec des équipements fonctionnant à une tension pouvant atteindre 1000V par simple reconfiguration des relais de puissance sans recours à un convertisseur de tension. On améliore ainsi la compatibilité de l'architecture électrique du système de batterie avec des équipements électriques de tension plus élevée. De plus, lorsqu'un état de charge bas est atteint, l'architecture du système de batterie permet de connecter les sous-systèmes de batterie en série pour procurer un effet d'augmentation de la puissance électrique (dit effet « Boost » en anglais).

D'autres caractéristiques et avantages de la présente invention apparaîtront plus clairement à la lecture de la description détaillée qui suit comprenant des modes de réalisation de l'invention donnés à titre d'exemples nullement limitatifs et illustrés par les dessins annexés, dans lesquels :
- la figure 1 représente schématiquement un véhicule automobile comportant un système de batterie rechargeable selon l'invention ;
- la figure 2 représente schématiquement un module de cellules électriques disposées dans un sous-système de batterie individuel du système de batterie ;
- la figure 3 représente un schéma électrique du système de batterie selon l'invention ;
- la figure 4 est un diagramme représentant un algorithme du procédé de contrôle du système de batterie selon l'invention permettant d'assurer un vieillissement homogène des sous-systèmes de batterie.

L'invention concerne les systèmes de batteries et de préférence pour des applications de forte puissance pouvant atteindre des puissances de 350KW et fonctionnant à des tensions allant de plusieurs dizaines de Volts (48V) à plusieurs centaines de Volts (950V environ). L'invention s'applique préférentiellement aux systèmes de batteries pour véhicules électriques et hybrides électriques pouvant être équipés d'une interface de recharge à une borne de recharge externe au véhicule.

L'invention vise à permettre l'interopérabilité du système de batterie avec les diverses classes de puissance normalisées de bornes de recharge, notamment en permettant une recharge à une tension de recharge élevée de l'ordre de 800V à 1000V tout en alimentant une interface du système de batterie à une tension d'alimentation inférieure. Un objectif de l'invention est d'améliorer la compatibilité du système de batterie avec les véhicules destinés à l'embarquer. Un autre objectif de l'invention d'assurer un vieillissement homogène des sous-systèmes de batterie formant le système de batterie.

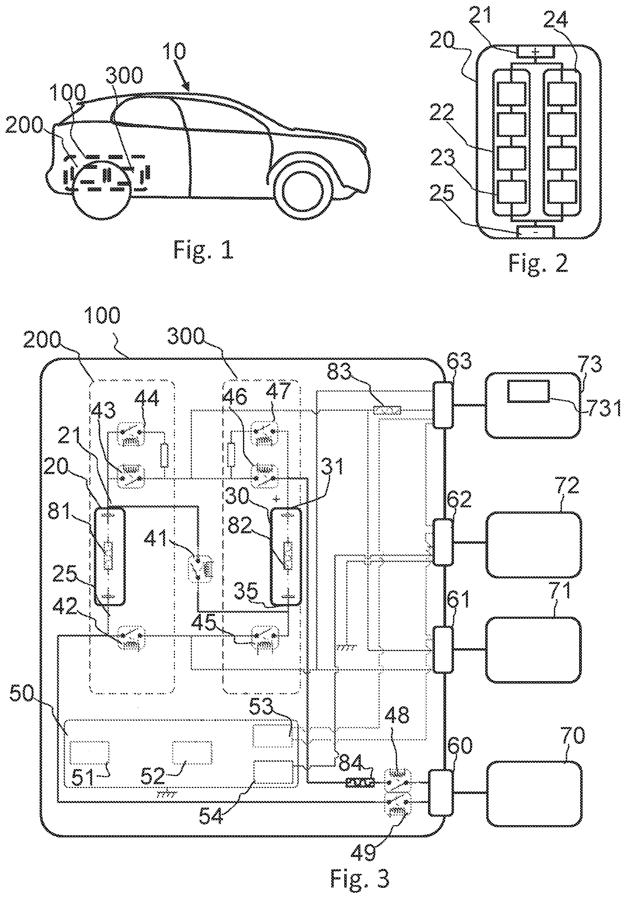

La figure 1 représente schématiquement un véhicule automobile 10 équipé d'un système de batterie rechargeable 100 muni de deux sous-systèmes de batterie 200, 300. Il est envisageable que le système de batterie comprenne trois sous-systèmes de batterie ou plus. Les sous-systèmes de batteries sont configurables en montage parallèle pour alimenter les équipements électroniques du véhicule à une tension d'alimentation déterminé, par exemple comprise entre 200V et 450V, mais aussi conformément à l'invention en montage série de manière à permettre l'opération d'une recharge électrique du système de batterie 100 à une tension de recharge supérieure à la tension d'alimentation des équipements, par exemple pouvant atteindre 1000V environ.

La figure 2 représente schématiquement un module de cellules électriques du sous-système de batterie 200 (identique au sous-système 300) et vise à définir les termes « système de batterie » et « sous-système de batterie ». Couramment, on désigne le système de batterie par le terme anglais « battery pack » et les sous-systèmes de batteries par le terme anglais « half-pack » dans le cas d'une application à deux sous-systèmes de batterie ou plus généralement « sub-pack ». On entend dans la description qu'un système de batterie peut être équipé d'une pluralité de sous-systèmes de batterie permettant le stockage et la restitution d'énergie électrique et dont les connexions électriques sont configurables par des moyens de commande de manière à permettre leur montage en série et/ou en parallèle en fonction de la tension et du courant électrique recherchés.

Plus précisément, le sous-système de batterie 200 comporte un module 20 de cellules électriques unitaires, ce module 20 pouvant être adressé individuellement par le système de batterie. Le module 20 comporte deux bornes de connexion 21, 25 pouvant fournir une tension électrique et un courant électrique déterminés en fonction du nombre de cellules électriques 23 assemblées en série et/ou en parallèle. A titre d'exemple non limitatif, on a représenté de façon simplifiée le module 20 de cellules unitaires d'un sous-système de batterie pouvant comporter deux rangées 22, 24 montées en parallèle et constituée chacune de quatre cellules électriques unitaires connectées en série. Comme cela est bien connu de l'homme du métier, il est envisageable qu'un sous-système de batterie comporte une unique rangée de cellules unitaires, trois rangées ou plus. Au sein d'un même sous-système de batterie, la configuration des connexions électriques entre les cellules électriques unitaires d'un même module est permanente et non modifiable. Tandis que dans le système de batterie la configuration des connexions électriques entre les sous-systèmes est reconfigurable selon le besoin électrique recherché.

La figure 3 représente un système de batterie 100 selon un mode de réalisation préférentiel de l'invention. Le système de batterie 100 est destiné à équiper un véhicule électrique (100% électrique ou hybride électrique) et est prévu pour être monté amovible dans le véhicule grâce à des interfaces électriques 60, 61, 62, 63 pouvant être branchées et débranchées électriquement avec des systèmes électriques du véhicules, ainsi qu'avec des systèmes externes au véhicule dans le cas d'une interface de recharge à une borne de recharge externe.

Le système de batterie 100 comporte deux sous-systèmes de batterie 200, 300 munis respectivement des deux modules de cellules unitaires 20, 30. Les sous-systèmes de batteries sont agencés pour fonctionner individuellement à des tensions continues comprises entre 200V et 450V. Dans une variante de puissance inférieure, chacun des sous-systèmes de batteries 200, 300 fournit une tension de 48V à ses bornes.

Dans ce mode de réalisation préférentiel, le système de batterie 100 comporte une première interface de recharge 60 destinée à fonctionner avec une borne de recharge externe 70 prévue pour fonctionner selon une tension de recharge compatible de classes de puissance normalisées allant de 10kW à plus de 350kW : FC10, FC20, FC50, HPC150, HPC250, HPC350. Plus précisément, l'interface de recharge 60 est prévue pour fonctionner à des tensions électriques comprises au moins entre 200V et 950V et pouvant supporter des courants électriques maximums de 500A environ. L'interface de recharge 60 est compatible des normes DIN SPEC 70121 (« *Électromobilité* - *Communication digitale entre la borne de recharge à courant continu et le véhicule électrique pour régler la charge à courant continu dans le système de charge combiné* ») et ISO 15118 *(« Véhicules routiers* - *Interface de communication entre véhicule et réseau électrique »).*

Le système de batterie comporte une deuxième interface 61 destinée à connecter électriquement une machine de traction électrique 71 du véhicule. L'interface 61 est une interface consommatrice du fait que la machine électrique de traction prélève de l'énergie électrique restituée par le système de batterie 100. Toutefois, l'interface 61 fonctionne également comme une interface de recharge lorsque la machine de traction électrique fonctionne comme un générateur électrique, en particulier lors d'une phase de freinage récupératif. L'interface 61 est prévue pour fonctionner à une tension comprise entre 200V et 450V ou à une tension de 48V environ pour une application de puissance inférieure.

En outre, le système de batterie comporte une troisième interface 62 destinée à la communication de données avec des circuits 72 de commande électroniques du véhicule, par exemple une unité de contrôle électronique du groupe motopropulseur du véhicule, généralement appelé superviseur. La troisième interface a pour objectif de communiquer les informations d'états du système de batterie 100, tel que l'état de charge (SOC pour « State of Charge » en anglais), l'état de santé (SOH pour « State of Health » en anglais), la tension, le courant et la température des sous-systèmes de batterie pour coordonner son fonctionnement avec les systèmes du véhicule.

En outre, le système de batterie 100 comporte une quatrième interface 63 destinée à connecter électriquement des systèmes électriques 73 comportant au moins un convertisseur de tension DC/DC 731 (continu/continu) pour alimenter un réseau de bord de plus faible tension du véhicule (48V, ou 12V par exemple), tel un compresseur de dispositif de régulation thermique du véhicule permettant de fournir du froid ou du chaud selon le besoin au système de batterie 100.

En outre, le système de batterie comporte des moyens de commande comprenant un dispositif de commande 50 (couramment désigné par l'acronyme BMS pour « Battery Management System » en anglais), de type calculateur à circuit intégré, et des moyens de commutation électronique, dans cette configuration au nombre de neuf, référencés 41, 42, 43, 44, 45, 46, 47, 48, 49. Ces moyens de commutation permettent une pluralité de configurations de connexion électrique entre les sous-systèmes de batterie 200, 300 pour configurer la tension et le courant électrique d'alimentation et de recharge du système de batterie 100, notamment pour la configuration de la tension de recharge avec l'interface de recharge 60 et la tension d'alimentation avec les interfaces 61, 63. A cet effet, le dispositif de commande 50 comporte des moyens de pilotage 51, 52 (couramment désigné par le terme anglais « Driver ») des commutateurs électroniques pour piloter la configuration des connexions entre les sous-systèmes de batterie 200, 300, mais aussi des connexions entre les sous-systèmes de batterie et les interfaces 60, 61, 63, du système de batterie.

Plus précisément, les moyens de commutation électronique 41 à 49 sont des interrupteurs de puissance pilotés, plus précisément des relais de puissance, prévus pour fonctionner avec les interfaces 60, 61, 63, c'est-à-dire à des tensions comprises entre 200V et 950V et pouvant supporter des courants électriques maximum d'environ 500A. Les relais 41 à 49 sont pilotés par les moyens de pilotage 51, 52 du dispositif de commande 50 dans un premier état ouvert empêchant la circulation de courant électrique et dans un deuxième état fermé permettant la circulation d'un courant électrique. Le premier moyen de pilotage 51 pilote l'alimentation des relais 41 à 49, et le deuxième moyen de pilotage 52 pilote le retour à la masse des relais 41 à 48. Les moyens de pilotage 51, 52 sont commandés par des moyens de contrôle du système de batterie 100.

Par ailleurs, le dispositif de commande 50 est en charge d'exécuter les fonctions inhérentes au fonctionnement du système de batterie. Des moyens de pilotage 53, 54 sont en charge d'exécuter les fonctions relatives à la sécurité du système, à son état de charge et à son état de santé. Ces moyens de contrôle communiquent avec les systèmes du véhicule automobile par l'intermédiaire de l'interface interfaces 62 et sont en charge en outre de coordonner le pilotage des moyens de pilotage 51, 52 des relais 41 à 49.

On décrit maintenant plus précisément la disposition des relais 41 à 49 permettant de configurer la connexion en série et en parallèle des sous-systèmes de batterie 200, 300 d'une part, et d'autre part l'alimentation des interfaces 61, 63 à partir d'un seul des deux sous-systèmes de batterie 200, 300 ou à partir des deux sous-systèmes de batterie en parallèle ou en série. Chacun des relais 41 à 49 comporte deux bornes de connexion électrique permettant le passage de courant électrique lorsqu'il est piloté dans un état fermé et permettant de couper le passage de courant électrique lorsqu'il est piloté dans un état ouvert.

Comme cela est illustré sur la figure 3, le premier relais 41 comporte une première borne reliée directement à une borne de connexion 35 du module 30 de cellules unitaires du sous-système de batterie 300. Dans cette configuration, la borne 35 est la borne de pôle négatif du sous-système 300. Le premier relais comporte la deuxième borne reliée directement à une borne de connexion 21 du module 20 de cellules unitaires du sous-système de batterie 200. La borne 21 est la borne de pôle positif du sous-système 200.

Les relais 42, 43, 44 forment partie du sous-système de batterie 200. Le relais 42 comporte une première borne connectée électriquement directement aux interfaces consommatrices 61, 63 et une deuxième borne connectée électriquement directement à la borne 25 de pôle négatif du module 20 de cellules unitaires. Les relais 43, 44 comportent chacun une première borne connectée électriquement directement à la borne 21 de pôle positif du module 20 de cellules unitaires et une deuxième borne connectée électriquement directement aux interfaces consommatrices 61, 63.

Les relais 45, 46, 47 forment partie du sous-système de batterie 300. Le relais 45 comporte une première borne connectée électriquement directement aux interfaces consommatrices 61, 63 et une deuxième borne connectée électriquement directement à la borne 35 de pôle négatif du module 30 de cellules unitaires. Les relais 46, 47 comportent chacun une première borne connectée électriquement directement à la borne 31 de pôle positif du module 30 de cellules unitaires et une deuxième borne connectée électriquement directement aux interfaces consommatrices 61, 63.

Les relais 48, 49 sont en charge de connecter électriquement l'interface de recharge 60 aux sous-systèmes de batterie 200, 300. A cet effet, chacun des deux relais comporte une première borne reliée à l'interface de recharge 60, et le relais 48 comporte la deuxième borne connectée électriquement à la borne 31 de pôle positif du sous-système de batterie 300 et le relais 49 comporte la deuxième borne connectée électriquement à la borne 25 de pôle négatif du sous-système de batterie 200.

Par ailleurs, des fusibles 81, 82, 83, 84 sont disposés dans le système pour assurer la sécurité électrique des connexions. En particulier, chaque sous-système de batterie 200, 300 comporte un fusible de protection.

Le premier relais a pour fonction de piloter la connexion série/parallèle des sous-systèmes de batterie 200, 300 lors de la recharge par l'intermédiaire de l'interface de recharge 60. En particulier, lorsqu'une recharge dite ultra rapide s'opérant à une tension comprise entre 800V et 1000V est commandée, les relais 41, 48, 49 sont pilotés dans un état fermé pour configurer les sous-systèmes de batterie en montage série. Lorsqu'une recharge s'opérant à une tension comprise entre 200V et 450V est commandée, les 48, 49 sont pilotés dans un état fermé et le relais 41 dans un état ouvert de manière à configurer les sous-systèmes de batterie en montage parallèle.

Les interfaces consommatrices 61, 63 sont alimentées par le sous-système de batterie 200 seul lorsque les relais 42, 43 sont fermés (le relais 44 étant fermé de manière temporaire le temps de procéder à une précharge) et les relais 45, 46, 47 sont ouverts. Les interfaces consommatrices sont alimentées par le sous-système de batterie 300 seul lorsque les relais 45, 46 sont fermés ( le relais 47 étant fermé de manière temporaire le temps de procéder à une précharge) et les relais 42, 43, 44 sont ouverts. Les interfaces consommatrices 61, 63 sont alimentées par les deux sous-systèmes de batterie 200 et 300 en parallèle lorsque les relais 42, 43, 45, 46 sont fermés, et le relais 41 ouvert. Les interfaces consommatrices 61, 63 sont alimentées par les deux sous-systèmes de batterie 200, 300 en série lorsque les relais 41, 42, 46 sont fermés, et les relais 43, 45 sont ouverts.

La configuration en série a pour avantage de permettre un fonctionnement du système de batterie à des tensions élevées et permet ainsi de réduire la section des câbles électriques du véhicule. On réduit ainsi le coût d'un véhicule.

Par ailleurs, le système de batterie selon l'invention permet avantageusement d'alterner l'alimentation des interfaces consommatrices durant l'opération d'une recharge de manière à alterner durant la recharge la sollicitation électrique demandée à chacun des sous-systèmes, et donc la montée en température d'un sous-système de batterie lors d'une recharge rapide. Comme on le sait, lors d'une recharge rapide telle celle d'une classe de puissance de 250kW ou 350kW, les sous-systèmes de batterie montent rapidement en température du fait des puissances électriques élevées. Pour les maintenir à une température satisfaisante, il est courant d'activer un dispositif de régulation thermique pour fournir du froid au système de batterie. Dans ce mode de réalisation, le dispositif de régulation thermique est alimenté par l'interface consommatrice 63 qui vient puiser de l'énergie électrique dans un seul des sous-systèmes de batteries 200, 300.

Ainsi lors d'une recharge commandée à la deuxième tension, les relais 42 à 47 des deux sous-systèmes de batterie 200, 300 sont pilotés en coordination par le moyen de pilotage 54 de manière à alimenter sélectivement l'interface consommatrice 63 par un seul desdits au moins deux sous-systèmes de batterie en fonction d'au moins un premier critère de commutation. L'alternance des sollicitations électriques permet d'assurer un vieillissement homogène des sous-systèmes de batterie tout au long de la durée de vie du système. En particulier, alterner les sollicitions lors des recharges électriques est primordial du fait de la montée en température des sous-systèmes lors de ces phases.

Dans un premier mode de pilotage de la commutation des sous-systèmes de batteries 200, 300, un premier critère de commutation est un seuil de protection de température et les moyens de commande sont configurés pour sélectionner le sous-système de batterie sollicité pour l'alimentation de l'interface consommatrice 63 en fonction d'une température estimée de chacun desdits au moins deux sous-systèmes de batterie et du seuil de protection de température.

Par exemple, si une recharge est en cours et que le dispositif de régulation thermique est activé, du fait que les sous-systèmes de batteries ont atteint un seuil de déclenchement du refroidissement, les relais sont pilotés pour alimenter dans un premier temps l'interface 63 par le sous-système de batterie 200. Si la température du sous-système de batterie 200 atteint un seuil de protection déterminé (paramétré en conception dans le moyen de pilotage 54), les relais sont pilotés pour déconnecter le sous-système de batterie 200 de l'interface consommatrice 63, puis pour connecter le sous-système 300 à l'interface consommatrice 63. Pour assurer un refroidissement constant cette opération est coordonnée en fonction de l'état du réseau de bord et d'une batterie du réseau de bord pour assurer le relais d'alimentation durant la commutation des sous-systèmes de batterie 200 à 300.

Dans un deuxième mode de pilotage de la commutation des sous-systèmes de batteries 200, 300, les moyens de commande sont configurés pour sélectionner le sous-système de batterie sollicité pour l'alimentation de l'interface consommatrice 63, parmi lesdits au moins deux sous-systèmes de batterie 200, 300, en fonction d'un deuxième critère de commutation. Ce deuxième critère de commutation est fonction d'un signal permettant d'identifier quel sous-système, parmi les au moins deux sous-systèmes de batterie, a été sollicité lors de la recharge précédente. Ce deuxième critère de commutation permet lors de l'activation du dispositif de régulation thermique de sélectionner le sous-système de batterie qui n'a pas été sollicité lors de la dernière recharge afin d'alterner entre chaque recharge tout au long de la durée de vie du système de batterie les sollicitations électriques lors des recharges. On évite ainsi un déséquilibre lors du vieillissement des sous-systèmes du fait des sollicitations lors des recharges électriques.

Le signal permettant d'identifier le sous-système qui a été sollicité lors de la dernière recharge est par exemple un drapeau, un paramètre d'information ou l'état de signaux électriques de pilotage des relais 41 à 49. Le signal est enregistré par le moyen de pilotage 54 lors de chaque recharge, de préférence lors de l'arrêt de la recharge, pour ensuite sélectionner le sous-système à solliciter lors de la recharge suivante en fonction de ce signal.

Par ailleurs, lors du roulage du véhicule, les moyens de commande sont configurés pour alimenter l'interface 61 d'alimentation de la machine électrique de traction à partir d'un seul des sous-systèmes de batteries, à partir des deux sous-systèmes en parallèle ou à partir des deux sous-systèmes en série, notamment pour fournir des performances électriques élevées.

Une stratégie de contrôle du système batterie prévoit qu'immédiatement à la suite d'une recharge (c'est-à-dire au démarrage et en début de roulage), les moyens de commande du système de batterie 100 alimentent la machine électrique de traction par le sous-système de batterie ayant le niveau de charge le plus élevé (du fait de la sollicitation pour le dispositif de régulation thermique lors de la recharge) jusqu'à la détection d'une condition équilibre électrique entre les deux sous-systèmes (condition de tension de fonctionnement) et alimentent ensuite l'interface de recharge par les deux sous-systèmes en parallèle une fois la condition d'équilibre électrique atteinte.

De plus, lors du roulage les moyens de commutation électronique 41-47 des deux sous-systèmes de batterie 200, 300 sont pilotés de manière à alimenter les interfaces consommatrices 61 et 63 par les deux sous-systèmes de batterie connectés en série en fonction d'un troisième critère de commutation. L'architecture du système de batterie est ainsi compatible d'équipements sur une plage de tension électrique amplifiée sans recours à un convertisseur de tension. L'interopérabilité du système de batterie est ainsi améliorée. De plus, l'architecture permet de déclencher une augmentation de la puissance d'alimentation des équipements électriques.

Plus précisément, une première stratégie de connexion en série lors du roulage consiste à rechercher un effet d'augmentation de la puissance électrique lorsque les sous-systèmes de batterie atteignent un seuil d'état de charge bas prédéterminé (enregistré en mémoire du moyen de pilotage 54). Dans cette situation, le troisième critère de commutation est la détection du seuil d'état de charge bas. Dans ce but, la machine électrique de traction est alimentée par la deuxième tension d'alimentation (entre 400V et 1000) fournie par la connexion en série pour augmenter la puissance du système de batterie en minimisant le courant (effet « boost » en anglais). Cette stratégie est déclenchée pour procurer une accélération du véhicule lors de la détection d'une manœuvre à forte dynamique, par exemple une manœuvre d'urgence.

Une deuxième stratégie de connexion en série lors du roulage consiste à alimenter des équipements connectés électriquement à l'interface 61 ou 63, lesdits équipements étant destinés à fonctionner à la deuxième tension d'alimentation comprise entre 400V et 1000V (compresseur, convertisseur de tension, machine électrique de traction). Dans cette situation, le troisième critère de commutation est la détection de l'activation d'un équipement électrique fonctionnant à la deuxième tension électrique.

L'invention prévoit également un procédé de contrôle d'un système de batterie rechargeable pour un véhicule. Le procédé est mis en œuvre par les moyens de commande du système de batterie et comporte, lors de l'activation d'une recharge opérée par l'intermédiaire de l'interface de recharge 60 à la deuxième tension de recharge (tension supérieure à la tension d'alimentation des interface consommatrice 61, 63) ou lors de la détection d'un besoin d'augmentation de la tension électrique (effet « boost », ou équipement fonctionnant en haute tension pouvant atteindre 1000V), la connexion desdits au moins deux sous-systèmes de batterie en série à l'interface de recharge 60 ou aux interfaces d'alimentation 61, 63.

On a décrit le système de batterie pour une application haute tension (entre 200V et 950) et pour une recharge pouvant atteindre 350kW. L'homme du métier saura adapter l'invention à une architecture de véhicule en 48V, c'est-à-dire que les interfaces 60, 61, 63 sont prévues pour fonctionner en 48V, tout en permettant une recharge électrique à une tension de 96V ou plus en fonction du nombre de sous-systèmes de batteries. Chacun des sous-systèmes de batterie est prévu dans cette variante pour fonctionner à une tension électrique de 48V.

On a décrit un système de batterie comprenant deux sous-systèmes de batteries individuels, mais il est envisageable d'appliquer l'invention à des systèmes de batteries ayant trois sous-systèmes ou plus. Des moyens de commutation électronique supplémentaires sont alors prévus pour assurer le montage en série de tout ou partie des sous-systèmes de batteries. Le système de batterie s'applique pour tout type de véhicule équipé d'un système de batterie rechargeable, tel un véhicule automobile à deux, trois ou quatre roues motorisées ou plus, mais aussi aux aéronefs de type avion, hélicoptère ou drone, ou les véhicules à traction humaine munis d'un système d'assistance électrique.

L'invention prévoit également un procédé de contrôle du système de batterie rechargeable permettant d'assurer un vieillissement homogène des sous-systèmes de batteries grâce à la possibilité d'alterner les sollicitations électriques lors des recharges.

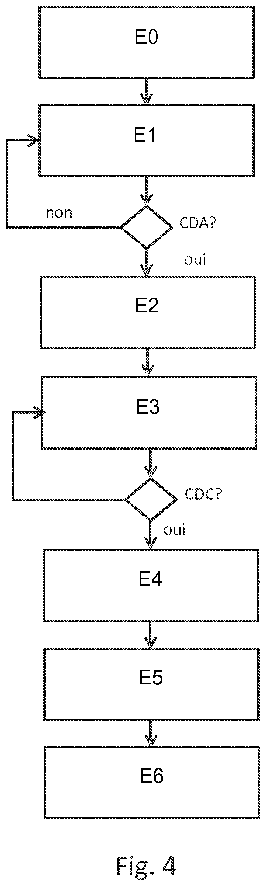

La figure 4 décrit un procédé de contrôle pour un véhicule comprenant au moins deux sous-systèmes de batteries et des moyens de commande pour piloter la configuration de connexion des au moins deux sous-systèmes de batteries à une interface de recharge d'une part, susceptible d'opérer une recharge à une tension de recharge comprise entre 200V et 450V et à une deuxième tension de recharge supérieure à la première tension et comprise entre 450V et 1000V, et à au moins une première interface consommatrice d'autre part, susceptible d'opérer à une tension d'alimentation déterminée (comprise entre 200V et 450V) et destinée à alimenter au moins un dispositif de régulation thermique du système de batterie. Le procédé est exécuté par les moyens de commande du système de batterie et s'applique préférentiellement pour le système de batterie décrit en figure 3.

A une étape initiale E0, le procédé comporte la commande d'une recharge électrique à la deuxième tension de recharge (comprise entre 450V et 1000V par exemple).

Le procédé comporte ensuite la connexion E1 en série des au moins deux sous-systèmes de batterie 200, 300 pour opérer la recharge à la deuxième tension de recharge. Dans ce mode de réalisation, la connexion E1 en série des au moins deux sous-systèmes de batterie 200, 300 comporte le pilotage du relais 41 dans un état fermé par le dispositif de commande 50 pour la configuration série et les relais 48, 49 dans un état fermé pour la connexion à l'interface de recharge 60. A cette phase du procédé, les autres relais peuvent être ouverts si les interfaces consommatrices 61, 63 ne sont pas demandeuse d'une alimentation.

Ensuite, en cas de détection d'une condition d'activation CDA d'un dispositif de régulation thermique du système de batterie, le procédé comporte une étape de détermination E2 d'un critère de sélection CS pour arbitrer le choix du sous-système de batterie pour l'alimentation de la première interface consommatrice 63, et la connexion E3 des bornes du premier sous-système 200 à la première interface consommatrice 63 est fonction du critère de sélection CS.

Le critère de sélection CS a pour objectif d'alterner les sollicitations électriques entre les sous-systèmes d'une charge électrique à une autre de manière à homogénéiser le vieillissement des sous-systèmes du système de batterie. Plus précisément, dans un mode de sélection, le critère de sélection CS est déterminé à partir du signal électronique permettant d'identifier quel sous-système, parmi les au moins deux sous-systèmes de batterie 200, 300, a été sollicité lors de la recharge précédente. Ce signal est un drapeau, un paramètre d'information ou l'état de signaux électriques de pilotage des relais 41 à 49.

Comme on le voit en figure 3, la connexion du sous-système de batterie 200 est opérée en fermant les relais 42, 43, 44, tandis que la connexion du sous-système de batterie 300 est opérée en fermant les relais 45, 46, 47. A cette étape du procédé, un seul sous-système de batterie parmi les au moins deux sous-systèmes du système est sollicité pour le besoin de refroidissement (ou pour un besoin de chauffage si les conditions météorologiques abaissent la température de fonctionnement des sous-systèmes sous un seuil de protection bas). On prend l'hypothèse que le sous-système 200 alimente seul l'interface 63. Le dispositif de régulation thermique est alimenté via le convertisseur de tension DC/DC.

Dans une variante, la connexion E3 est réalisée automatiquement sans prendre en compte l'étape de détermination E2. Cette dernière étape n'est pas obligatoire.

Ensuite, en cas de détection d'une condition de commutation CDC lors de la recharge, le procédé comporte la déconnexion E4 des bornes du sous-système de batterie 200 de l'interface consommatrice 63, puis la connexion E5 des bornes du sous-système 300 à la première interface consommatrice 63. Lors de la commutation, le dispositif de régulation thermique est éteint ou branché sur une alimentation relais (par exemple la batterie du réseau de bord du véhicule) de manière à opérer la reconfiguration des relais en toute sécurité. Une fois que le sous-système de batterie 300 est connecté à l'interface 63, le dispositif de régulation est alimenté par le sous-système 300. La déconnexion E4 est opérée en ouvrant les relais 42, 43, 44, et la connexion du sous-système de batterie 300 est opérée en fermant les relais 45, 46, 47.

Ainsi, grâce au procédé, on alterne les sollicitations électriques qui sont exercées sur les sous-systèmes de batterie. Cette alternance lors des recharges permet d'assurer un vieillissement homogène du système de batterie.

Le procédé prévoit deux modes de contrôle pour déclencher la commutation. Dans un premier mode, la condition de commutation CDC est active lorsque la température estimée du premier sous-système de batterie atteint un seuil de protection de température. Il s'agit typiquement d'une situation de montée en température critique du fait des sollicitations électriques de la recharge électrique et de l'alimentation du système de régulation thermique. Dans cette situation, il est très probable que le sous-système 200 ait atteint une température plus élevée que le sous-système 300, ce dernier n'étant pas sollicité pour restituer de l'énergie électrique.

Dans un deuxième mode, la condition de commutation CDC est active en cas de détection d'un premier état de vieillissement ET1 du sous-système de batterie 200 qui est supérieur à un deuxième état de vieillissement ET2 du deuxième sous-système de batterie. Tant que la température du sous-système de batterie reste dans la plage de température de fonctionnement optimal, le sous-système est maintenu connecté à l'interface consommatrice. Toutefois, si on détecte un état de vieillissement supérieur à l'autre sous-système de batterie, le procédé déclenche la commutation. Si on détecte une température dépassant le seuil de protection, alors le procédé commande l'arrêt de la recharge ou la commutation sur l'autre sous-système de batterie, si celui-ci est en condition électrique et thermique pour alimenter le dispositif de régulation thermique.

Plus précisément, le premier état de vieillissement et le deuxième état de vieillissement ET1, ET2 sont déterminés par une fonction d'évaluation du vieillissement des au moins deux sous-systèmes de batteries mise en œuvre par le dispositif de commande 50. La fonction d'évaluation du vieillissement analyse les tensions et les courants de sollicitation, le nombre de cycles de recharge au cours de la vie du système de batterie pour générer le premier et deuxième état. Ces fonctions d'évaluation du vieillissement sont connues de l'homme du métier et sont généralement intégrées aux fonctions de pilotage du dispositif de commande pour surveiller l'état de santé des sous-systèmes de batterie.

Finalement, lors de la détection de la fin de la recharge, le procédé comporte en outre la connexion E6 d'un seul sous-système de batterie du système de batterie, celui ayant l'état de charge le plus haut parmi les au moins deux sous-systèmes de batterie, à l'interface consommatrice 61 destinée à alimenter la machine de traction électrique de manière à équilibrer l'état de charge entre les sous-systèmes de batterie lors du début de la phase de roulage. Cette étape permet de décharger dans un premier temps le sous-système de batterie ayant atteint l'état de charge le plus haut (car pas, ou moins sollicité pour la régulation thermique) de manière à atteindre l'équilibre électrique nécessaire pour un fonctionnement en parallèle des sous-systèmes de batterie (équilibre en tension aux bornes des sous-systèmes).

Par ailleurs, lors du roulage, si un des sous-systèmes a atteint un seuil critique de fonctionnement (par exemple, état de fonctionnement détérioré du fait d'un impact sur le sous-système, capacité nominale inférieure à un seuil critique, la résistance interne a dépassé un seuil critique, état de vieillissement supérieur à un seuil critique), le dispositif de commande du système de batterie pilote la déconnexion du sous-système ayant un fonctionnement dégradé, via le pilotage coordonné des relais 42 à 47, tout en continuant d'assurer l'alimentation de l'interface 61 par l'autre sous-système.

## Revendications

1. Procédé de contrôle d'un système de batterie rechargeable (100) pour un véhicule, le système comportant au moins deux sous-systèmes de batteries (200, 300), au moins une interface de recharge (60) susceptible d'opérer une recharge à une première tension de recharge lorsque les dits sous-systèmes de batteries (200, 300) sont configurés en montage parallèle et à une deuxième tension de recharge lorsque les dits sous-systèmes de batteries (200, 300) sont configurés en montage série, et au moins une première interface consommatrice (63) susceptible d'opérer à une première tension d'alimentation déterminée et alimentant au moins un dispositif de régulation thermique desdits au moins deux sous-système de batteries (200, 300) du système de batterie, des moyens de commande (50, 41-49) pour piloter la configuration de connexion des au moins deux sous-systèmes de batteries à l'interface de recharge (60) et à la première interface consommatrice (63), **caractérisé en ce qu'**il comporte les étapes successives suivantes lors de l'activation d'une recharge opérée par l'intermédiaire de l'interface de recharge (60) à la deuxième tension :
- la connexion (E1) en série des au moins deux sous-systèmes de batterie (200, 300) pour opérer une recharge à la deuxième tension de recharge,
- en cas de détection d'une condition d'activation (CDA) d'un dispositif de régulation thermique du système de batterie, la connexion (E3) des bornes d'un premier sous-système (200) seulement parmi les au moins deux sous-systèmes de batterie (200, 300) à la première interface consommatrice (63),
- en cas de détection d'une condition de commutation (CDC) lors de la recharge à ladite deuxième tension de recharge, la déconnexion (E4) des bornes du premier sous-système de batterie (200) de la première interface consommatrice (63), puis la connexion (E5) par les moyens de commande des bornes d'un deuxième sous-système (300) parmi les au moins deux sous-systèmes de batterie à la première interface consommatrice (63).

2. Procédé selon la revendication 1, **caractérisé en ce que** la connexion (E1) en série des au moins deux sous-systèmes de batterie (200, 300) consiste à piloter un moyen de commutation électronique (41) dans un état fermé.

3. Procédé selon la revendication 1 ou 2, **caractérisé en ce qu'**il comporte en outre la détermination (E2) d'un critère de sélection (CS) pour arbitrer le choix du sous-système de batterie parmi les au moins deux sous-systèmes (200, 300) pour l'alimentation de la première interface consommatrice (63), et **en ce que** la connexion (E3) des bornes du premier sous-système (200) à la première interface consommatrice (63) est fonction du critère de sélection (CS).

4. Procédé selon la revendication 3, **caractérisé en ce que** le critère de sélection (CS) est déterminé à partir d'un signal électronique permettant d'identifier quel sous-système, parmi les au moins deux sous-systèmes de batterie (200, 300), a été sollicité lors de la recharge précédente.

5. Procédé selon l'une quelconque des revendications 1 à 4, **caractérisé en ce que** la condition de commutation (CDC) est active lorsque la température estimée du premier sous-système de batterie (200) atteint un seuil de protection de température.

6. Procédé selon l'une quelconque des revendications 1 à 5, **caractérisé en ce que** la condition de commutation (CDC) est active en cas de détection d'un premier état de vieillissement (ET1) du premier sous-système de batterie qui est supérieur à un deuxième état de vieillissement (ET2) du deuxième sous-système de batterie.

7. Procédé selon la revendication 6, **caractérisé en ce que** le premier état de vieillissement et le deuxième état de vieillissement (ET1, ET2) sont déterminés par une fonction d'évaluation du vieillissement des au moins deux sous-systèmes de batteries, ladite fonction étant exécutée par les moyens de commandes.

8. Procédé selon l'une quelconque des revendications 1 à 7, **caractérisé en ce que**, pour configurer les connexions des bornes du premier et du deuxième sous-système de batterie (200, 300) à la première interface consommatrice (63), des moyens de commutation électronique du premier et du deuxième sous-système de batteries (200, 300) sont pilotés de façon coordonnée par un moyen de pilotage (54).

9. Procédé selon l'une quelconque des revendications précédentes, **caractérisé en ce que** lors de la détection de la fin de la recharge, le procédé comporte en outre la connexion d'un sous-système de batterie seul ayant l'état de charge le plus haut, parmi les au moins deux sous-systèmes de batterie (200, 300), à une deuxième interface consommatrice (61) destinée à alimenter une machine de traction électrique de manière à équilibrer l'état de charge entre les sous-systèmes de batterie durant le roulage du véhicule.

10. Véhicule (10) comprenant un système de batterie rechargeable (100), le système comportant au moins deux sous-systèmes de batteries (200, 300), au moins une interface de recharge (60) susceptible d'opérer une recharge à une première et à une deuxième tension de recharge et au moins une première interface consommatrice (63) susceptible d'opérer à une première tension d'alimentation déterminée et alimentant au moins un dispositif de régulation thermique du système de batterie, des moyens de commande (50, 41-49) pour piloter la configuration de connexion des au moins deux sous-systèmes de batteries à l'interface de recharge (60) et à la première interface consommatrice (63), **caractérisé en ce que** les moyens de commandes sont configurés pour exécuter le procédé selon l'une quelconque des revendications précédentes lors de l'activation d'une recharge opérée par l'intermédiaire de l'interface de recharge à la deuxième tension.

## Patentansprüche

1. Verfahren zum Steuern eines wiederaufladbaren Batteriesystems (100) für ein Fahrzeug, wobei das System mindestens zwei Batterieteilsysteme (200, 300) umfasst, mindestens eine Aufladeschnittstelle (60), die ein Aufladen auf eine erste Aufladespannung durchführen kann, wenn genannt Batterieteilsysteme (200, 300) in Parallelschaltung und auf einer zweiten Ladespannung konfiguriert sind, wenn die Batterieteilsysteme (200, 300) in Reihenschaltung konfiguriert sind, und mindestens eine erste Verbraucherschnittstelle (63), die bei einer ersten bestimmten Versorgungsspannung und Versorgung von mindestens einer thermischen Regeleinrichtung der mindestens zwei Batterieteilsysteme (200, 300) des Batteriesystems, Steuermittel (50, 41-49) zur Steuerung der Anschlusskonfiguration der mindestens zwei Batterie-Teilsysteme an die Aufladeschnittstelle (60) und an die erste Verbraucherschnittstelle (63), **dadurch gekennzeichnet, dass** sie die Schritte aufeinanderfolgende Schritte beim Aktivieren einer Aufladeeinheit umfasst über die Nachladeschnittstelle (60) bei der zweiten Spannung :
- die Reihenschaltung (EI) von mindestens zwei Batterie-Subsystemen (200, 300) für aufladen bei der zweiten Ladespannung,
- bei Erkennung einer Aktivierungsbedingung (CDA) einer thermischen Regulierungsvorrichtung des Batteriesystems die Verbindung (E3) der Anschlüsse eines ersten Teilsystems (200) nur unter den mindestens zwei Teilbatteriesystemen (200, 300) bei die erste Verbraucherschnittstelle (63),
- bei Erkennung eines Schaltzustandes (CDC) während des Aufladens an besagtem zweite Ladespannung, Abtrennen (E4) der Pole des ersten Teilbatterie-Teilsystems (200) von der ersten Verbraucherschnittstelle (63), dann Zuschalten (E5) durch die Klemmensteuerung eines zweiten Teil-Teilsystems der mindestens zwei Batterie Subsysteme (300) an der ersten Verbraucherschnittstelle (63).

2. Verfahren nach Anspruch 1, **dadurch gekennzeichnet, dass** die Verbindung (EI) in Reihe mindestens zwei Batterie-Teilsysteme (200, 300) darin besteht, ein elektronisches Schaltmittel (41) in einen geschlossenen Zustand zu treiben.

3. Verfahren nach Anspruch 1 oder 2, **dadurch gekennzeichnet, dass** es ferner das Bestimmen (E2) eines Auswahlkriteriums (CS) umfasst, um die Wahl des Batterieuntersystems unter den mindestens zwei Untersystemen (200, 300) für die Versorgung des ersten Verbrauchers zu arbitrieren Schnittstelle (63) und dass die Verbindung (E3) der Endgeräte des ersten Subsystems (200) mit der die erste Verbraucherschnittstelle (63) ist eine Funktion des Auswahlkriteriums (CS).

4. Verfahren nach Anspruch 3, **dadurch gekennzeichnet, dass** das Auswahlkriterium (CS) aus einem elektronischen Signal bestimmt wird, das es ermöglicht zu erkennen, welches Untersystem von den mindestens zwei Batterie-Untersystemen (200, 300) während des vorherigen Aufladens angefordert wurde.

5. Verfahren nach einem der Ansprüche 1 bis 4, **dadurch gekennzeichnet, dass** die Schaltbedingung (CDC) ist aktiv, wenn die geschätzte Temperatur des ersten Batterieuntersystems (200) einen Temperaturschutzschwellenwert erreicht.

6. Verfahren nach einem der Ansprüche 1 bis 5, **dadurch gekennzeichnet, dass** die Schaltbedingung (CDC) bei Erkennen eines ersten Alterungszustands (ET1) des ersten Batterieteilsystems, der größer als ein zweiter Alterungszustand (ET2) ist, aktiv ist des zweiten Batterie-Subsystems.

7. Verfahren nach Anspruch 6, **dadurch gekennzeichnet, dass** der erste Alterungszustand und der zweite Alterungszustand (ET1, ET2) durch eine Funktion zur Bewertung der Alterung der mindestens zwei Batterieteilsysteme bestimmt werden, wobei die Funktion durch Befehle ausgeführt wird.

8. Verfahren nach einem der Ansprüche 1 bis 7, **dadurch gekennzeichnet, dass** für die Anschlüsse der Anschlüsse des ersten und zweiten Batterie-Teilsystems (200, 300) an die erste Verbraucherschnittstelle (63) konfigurieren, elektronische Schaltmittel des ersten und zweiten Batterie-Teilsystems (200, 300) werden koordiniert gesteuert von a Steuermittel (54).

9. Verfahren nach einem der vorhergehenden Ansprüche, **dadurch gekennzeichnet, dass** bei Erkennung des Endes des Aufladens umfasst das Verfahren ferner das Verbinden eines einzelnen Batterie-Teilsystems mit dem höchsten Ladezustand unter den mindestens zwei Batterie-Teilsystemen (200, 300) mit einer zweiten Verbraucherschnittstelle (61), die dazu bestimmt ist, ein elektrisches Gerät zu versorgen Traktionsmaschine, um den Ladezustand zwischen den Teilsystemen der Batterie während der Fahrt.

10. Fahrzeug (10) mit einem wiederaufladbaren Batteriesystem (100), wobei das System mindestens zwei Batterieteilsysteme (200, 300) umfasst, mindestens eine Nachladeschnittstelle (60), die ein Nachladen mit einer ersten und zweiten Nachladespannung durchführen kann und mindestens eine erste Verbraucherschnittstelle (63), die bei einer ersten Spannung betrieben werden kann Stromversorgung ermittelt und versorgt mindestens eine Wärmeregelungseinrichtung des Batteriesystems, Steuermittel (50, 41-49) zum Steuern der Anschlusskonfiguration der mindestens zwei Batterie-Teilsysteme an die Nachladeschnittstelle (60) und an die erste Verbraucherschnittstelle (63), **dadurch gekennzeichnet, dass** die Steuermittel so konfiguriert sind, dass sie das Verfahren nach einem der vorhergehenden Ansprüche während der Aktivierung einer Nachfüllung ausführen über die Nachladeschnittstelle mit der zweiten Spannung betrieben.

## Claims

1. Method of controlling a rechargeable battery system (100) for a vehicle, the system comprising at least two battery subsystems (200, 300), at least one recharging interface (60) capable of operating a recharging to a first recharging voltage when said battery subsystems (200, 300) are configured in parallel connection and at a second recharging voltage when said battery subsystems (200, 300) are configured in series connection, and at least a first consumer interface (63) capable of operating at a first determined supply voltage and supplying at least one thermal regulation device of said at least two battery subsystems (200, 300) of the battery system, control means (50, 41-49) for controlling the connection configuration of the at least two battery subsystems to the recharging interface (60) and to the first consumer interface (63), **characterized in that** it comprises the steps successive steps when activating a recharge operated via the recharge interface (60) at the second voltage :
- the connection (EI) in series of at least two battery subsystems (200, 300) for recharge at the second recharge voltage,
- upon detection of an activation condition (CDA) of a thermal regulation device of the battery system, the connection (E3) of the terminals of a first subsystem (200) only among the at least two sub - battery systems (200, 300) at the first consumer interface (63),
- in case of detection of a switching condition (CDC) during recharging at said second recharging voltage, disconnection (E4) of the terminals of the first battery subsystem (200) from the first consumer interface (63), then connection (E5) by the terminal control means of a second sub- one of the at least two battery subsystems (300) at the first consumer interface (63).

2. Method according to claim 1, **characterized in that** the connection (EI) in series of at least two battery subsystems (200, 300) consists of driving an electronic switching means (41) in a closed state.

3. Method according to claim 1 or 2, **characterized in that** it further comprises determining (E2) a selection criterion (CS) to arbitrate the choice of the battery subsystem among the at least two subsystems (200, 300) for the supply of the first consumer interface (63), and **in that** the connection (E3) of the terminals of the first subsystem (200) to the first consumer interface (63) is a function of the selection criterion (CS).

4. Method according to Claim 3, **characterized in that** the selection criterion (CS) is determined from an electronic signal making it possible to identify which subsystem, among the at least two battery subsystems (200, 300), was requested during the previous recharge.

5. Method according to any one of claims 1 to 4, **characterized in that** the switching condition (CDC) is active when the estimated temperature of the first battery subsystem (200) reaches a temperature protection threshold.

6. Method according to any one of claims 1 to 5, **characterized in that** the switching condition (CDC) is active upon detection of a first state of aging (ET1) of the first battery subsystem which is greater than a second state of aging (ET2) of the second battery subsystem.

7. Method according to claim 6, **characterized in that** the first state of aging and the second state of aging (ET1, ET2) are determined by a function for evaluating the aging of the at least two battery subsystems, said function being executed by means of commands.

8. Method according to any one of claims 1 to 7, **characterized in that** for configure the connections of the terminals of the first and second battery subsystem (200, 300) to the first consumer interface (63), electronic switching means of the first and second battery subsystem (200, 300) are controlled in a coordinated manner by a control means (54).

9. Method according to any one of the preceding claims, **characterized in that** upon detection of the end of recharging, the method further comprises connecting a single battery subsystem having the highest state of charge, among the at least two battery subsystems (200, 300), to a second consumer interface (61) intended to supply an electric traction machine so as to balance the state of charge between the subsystems of battery while the vehicle is being driven.

10. Vehicle (10) comprising a rechargeable battery system (100), the system comprising at least two battery subsystems (200, 300), at least one recharging interface (60) capable of carrying out recharging at one first and second recharging voltage and at least one first consumer interface (63) capable of operating at a first voltage power supply determined and supplying at least one thermal regulation device of the battery system, control means (50, 41-49) for controlling the connection configuration of the at least two battery subsystems to the recharging interface (60) and to the first consumer interface (63), **characterized in that** the control means are configured to execute the method according to any one of the preceding claims during the activation of a refill operated via the recharging interface at the second voltage.
